# EUROPEAN PATENT APPLICATION

(11) **EP 1 437 294 A2**
(43) Date of publication of application: **14.07.2004**
(21) Application number: 04425008.2
(22) Date of filing: 09.01.2004
(51) Int. Cl.: B62J 1/26

(54) **Anatomical saddle for bicycle**

(30) Priority: 13.01.2003 IT VE20030001
(71) Applicant: INNTEK, Srl., 30027 San Donà di Piave (Venezia) (IT)
(72) Inventor: Urban, Ivano, 30017 Jesolo Lido Venezia (IT)

(57) **Abstract**

The present invention relates to a bicycle saddle particularly conceived for bicycles providing a prone position for the cyclist. The present saddle provides anatomical abutments that exclusively concern the underside of the glutei and the inguinal ends, eliminating any compression on the perineal zone and on the genital organs, allowing the cyclist to take a bow position and the cyclist's legs to exert force on a pedal group situated in a back position.

## Description

### Technical field

The invention to be described refers to a saddle for a bicycle, which allows a convenient prone position for the cyclist, a position that allows the man/machine ensemble to achieve decidedly higher speed performances than conventional systems.

### Prior art

The prior art searches having this invention as an object verified that no inventor has adopted a technology as described in this invention for an application of this type, thus providing the present invention with the novelty requisite in the background art.

### Disclosure of the invention

The invention to be described in this application relates to a bicycle saddle engineered for the prone position of the cyclist, the main peculiarity in the cyclist's anatomical shape, which provides the cyclist with a sitting position specially conceived to apportion the compression generated by the body weight on the anatomical parts so that when the latter are submitted to certain stresses, pains or specific troubles with regard to pedalling are not provoked, and these are: gluteus, inner sides of the thighs, pelvic inguinal areas, moreover the particular anatomical shape of this innovative bicycle saddle contemplates a niche suitable for accommodating the encumber produced by the male genital parts, and on the central part, the particular arrangement of soft material coating forms a channel able to offer partial support to the perineum, maintaining this particular anatomical zone, which can cause much pain if submitted to stress, almost suspended and partially excluded by the pressure exerted by said body weight.

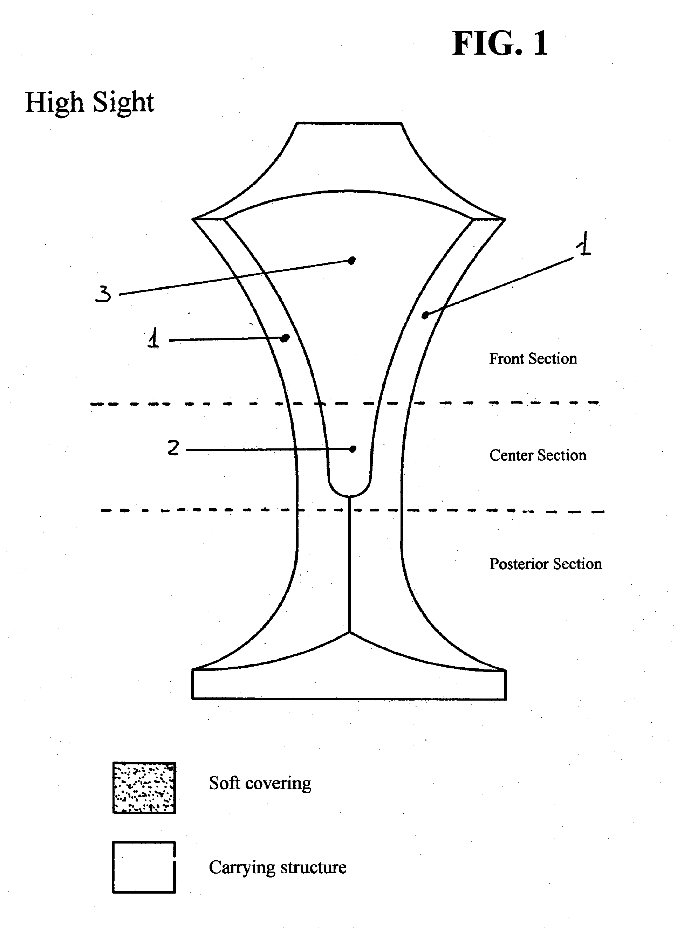

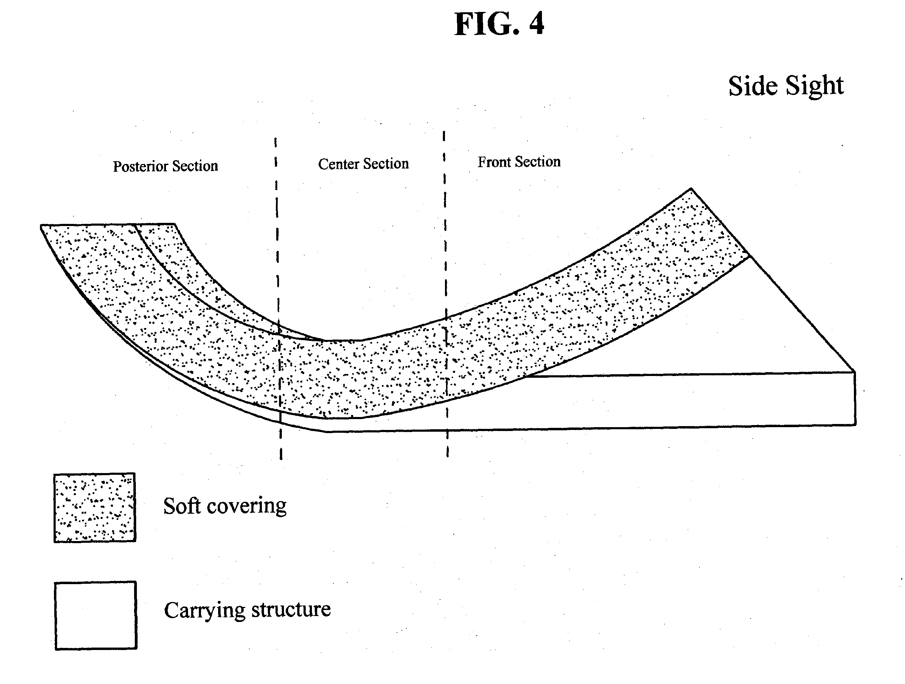

For the better understanding of the specified description, four drawings referred to as Fig. 1/4 - 2/4 - 3/4 - 4/4 that form part of the present document are enclosed.

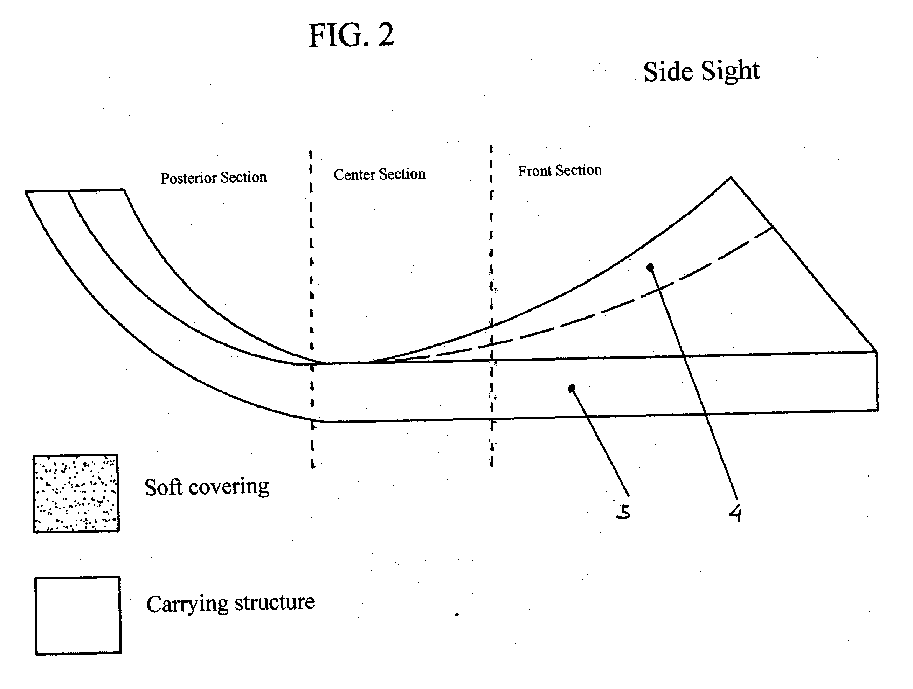

In Fig. 1/4, plan view, and in Fig. 2/4 side view, the shape of the carrying structure related to the bicycle saddle that is the object of this invention is presented, the hashed lines placed in transverse direction, delimit zones called: center section, posterior section, front section.

The center section is the sector that has a width and thickness less than those of the front sections and posterior section, the particular shape of the front sections and posterior section imposes on the sitting position the support on the central section of the perineal anatomical part and inner sides of the thighs, from the central section the fins or protrusions (1) start, prearranged for the support of the pubic inguinal anatomical parts, their shape is semi-circular facing upwards and outwards, in the center section the top of the niche (2) starts, taking the shape of half a cone with the base facing towards the front section (3), this sector is arranged to accommodate the encumbrance of the male genital parts, the posterior section is the sector of the saddle arranged to support the anatomical part that is the lower glutei, and its shape negatively reflects this form, having sides facing backwards and circularly upwards and outwards from the center section, in the central sector of the posterior section the circular shaping longitudinally has a radius lower than the sides, the underside of the front section has the same thickness and width as the center section (5), a sector for the fixing of the joint for front/posterior up/down adjustments is provided, in Fig. 2/4, the sector of the front-center sections, identified by a semi-circular dashed line marked with the n° 4, indicates the profile of the niche obtained between the side fins, prearranged to accommodate the encumbrance of the male genital parts.

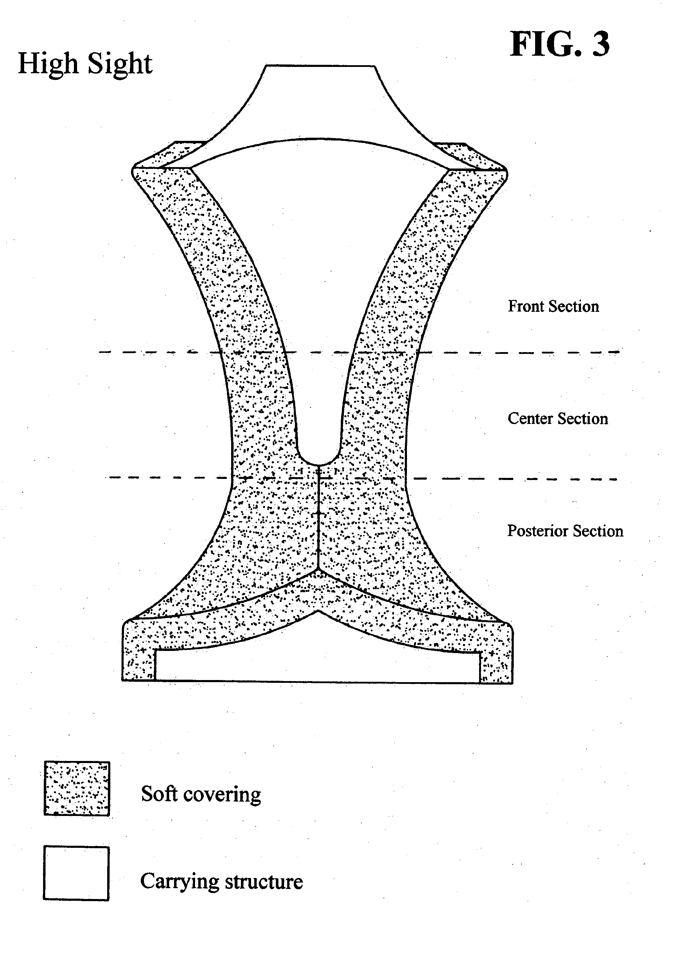

In Fig. 3/4 plan view, and Fig. 4/4 side view, the coating made with soft material is represented as closed cell neoprene or a similar material, such coating covers the entire upper surface of the posterior section, continuing on the upper surface of the side fins that start in the center section ending on the front section, the coating continues on the left and right side partially covering the surfaces and remaining integral with the upper coating, the niche in the form of half a cone with the top placed towards the center section and base placed towards the front section is not covered by the coating, and the thickness of said coating will accentuate the depth creating a longitudinal channel in the center section and a sufficient space to contain the encumbrance produced by the male genital parts.

The special shape together with the particular coating, as described above, of this anatomical bicycle saddle particularly for bicycles prearranged to a prone position, allow the cyclist's sitting position to provide support for the anatomical parts so that if submitted to compression generated by body weight, pains or specific troubles in the pedalling action will not be provoked.

### Optimum implementation of the invention

As previously mentioned, this invention allows a bicycle design in which it is possible to provide a prone position for the cyclist, providing multiple advantages deriving from a similar position summarized by: improving the aerodynamic penetration coefficient, improvement of pulmonary ventilation, improving energy transfer.

### Industrial applicability

The analysis made for carrying out an improved industrial process for the product deriving from the present invention is fulfilled by producing the product improvement systems at present adopted for forming products in composite materials, adding the points to support the anatomical parts and soft materials, adhering them by means of suitable glues.

## Claims

1. Anatomical bicycle saddle, particularly for bicycles providing a prone position for the cyclist.

2. Anatomical bicycle saddle, according to claim 1, **characterized in that** the center section has a thickness and a width lower than the front/posterior sections (Fig. 1/4-2/4).□

3. Anatomical saddle for bicycle, according to claim 1, **characterized in that** on the sides of the saddle carrying structure two semi-circular fins facing upwards and outwards are present, starting in the center section and ending in the front section.

4. Anatomical bicycle saddle, according to claim 1, **characterized in that** between the side fins a niche having the form of half a cone with the top in the center section and the base towards the front section is obtained.

5. Anatomical bicycle saddle, according to claim 1, **characterized in that** the shaping of the posterior section (Fig. 1/4-2/4) takes the form, negatively, of the features of the underside of the glutei.

6. Anatomical bicycle saddle, according to claim 1, **characterized in that** the surface of the posterior section and of the side fins are coated with soft material with the characteristics of closed cell neoprene, such coating will partially cover the sides and is integral with the upper coating.

7. Anatomical bicycle saddle, according to claim 6, **characterized in that** the coating in soft material with the characteristics of closed cell neoprene, adheres perfectly to the surfaces indicated in claim 6.

8. Anatomical bicycle saddle, according to claim 4, **characterized in that** the surface of the niche has a semi-cone shape wherein the top is placed towards the center section and the base towards the front section, without needing coating.

9. Anatomical bicycle saddle, according to claim 6, **characterized in that** the thickness of the coating in soft material with the characteristics of closed cell neoprene, shaping the right-hand and left-hand edges of the niche, determines the greater depth of the latter.
